# EUROPÄISCHE PATENTSCHRIFT

(11) **EP 1 923 680 B1**
(45) Veröffentlichungstag und Bekanntmachung des Hinweises auf die Patenterteilung: **28.01.2015**
(21) Anmeldenummer: 07022021.5
(22) Anmeldetag: 13.11.2007
(51) Int. Cl.: G01L 1/22

(54) **Verfahren zum Herstellen einer Signalstruktur**
Method for manufacturing a signal structure
Procédé de fabrication d'une structure de signal

(30) Priorität: 15.11.2006 DE 102006054502
(43) Veröffentlichungstag der Anmeldung: 21.05.2008
(73) Patentinhaber: Strukturleichtbau e.V., 09126 Chemnitz (DE); Modespitze Plauen GmbH, 08523 Plauen (DE)
(72) Erfinder: Elsner, Holg, Dipl.-Ing., 09127 Chemnitz (DE); Heinrich, Michael, Dipl.-Ing., 09112 Chemnitz (DE); Ulbricht, Jens, Dipl.-Ing., 09306 Königshain-Wiederau (DE); Kroll, Lothar, Dr. -Ing. habil, 01324 Dresden (DE); Zipplies, Eberhard, Dr. -Ing., 09120 Chemnitz (DE); Reinhardt, Andreas, 08529 Plauen (DE)
(74) Vertreter: Steiniger, Carmen

(56) Entgegenhaltungen:
- EP-A- 0 161 895
- DE-A1- 10 360 309
- DE-A1-102004 030 261
- GB-A- 869 498
- GB-A- 936 949
- US-A1- 2001 043 200
- US-A1- 2003 056 599
- US-A1- 2005 146 076
- ISHIKAWA M ET AL: "A Tactile Sensor Sheet Using Pressure Conductive Rubber With Electrical-Wires Stitched Method", IEEE SENSORS JOURNAL, IEEE SERVICE CENTER, NEW YORK, NY, US, vol. 4, no. 5, 1 October 2004 (2004-10-01) , pages 589-596, XP011118203, ISSN: 1530-437X, DOI: 10.1109/JSEN.2004.833152

## Beschreibung

Die vorliegende Erfindung betrifft ein Verfahren zum Herstellen einer Signalstruktur für die Herstellung eines Dehnungs-, Druck- und/oder Bruchsensors oder eines Aktors.

Im Stand der Technik ist es bekannt, Dehnungs-, Druck- oder Bruchsensoren oder Aktoren auf vielfältige Art und Weise herzustellen. Beispielsweise können Dehnungen oder Drücke mit Wegsensoren oder Dehnungsmessstreifen gemessen werden, wobei als Wegmesssensoren Laser, Lichtschranken oder induktive Sensoren oder als Dehnungsmessstreifen Messgitter aus DMS-Werkstoffen eingesetzt werden können, welche bei geometrischer Verformung ihren Widerstand ändern. Als Bruchsensoren kommen u. a. geschlossene Schalter zum Einsatz, welche bei Erschütterung oder Bruch öffnen.

Bedingt durch die Vielzahl von Anwendungsmöglichkeiten für Dehnungs-, Druck- und/oder Bruchsensoren besteht ein immer höherer Bedarf an einer möglichst hohen Flexibilität der Gestaltbarkeit solcher Sensoren auf einem geringen Kostenniveau.

Die Druckschrift GB 936 949 beinhaltet ein Verfahren zur Herstellung eines Dehnungssensors. Hierfür wird ein elektrischer Leiter in Form von parallelen Linien in ein Blatt Papier mit Zickzack-Stichen genäht. Das Blatt wir daraufhin in eine Vielzahl von etwa trapezförmigen Falten gefaltet. Das gefaltete Papier wird dann in ein Epoxidharz eingebettet, welches nachfolgend ausgehärtet wird. Daraufhin wird auf die Oberfläche des ausgehärteten Körpers jeweils eine Schicht Packpapier, eine Stahlplatte und eine Folie aufgebracht, sodass ein sandwichartiger Aufbau ausgebildet wird. Die elektrischen Leiter in dem Messaufnehmer und der zusätzlich verwendeten Dummy-Struktur werden jeweils an ihrem losen Ende mit einem Streifen verbunden, welcher wiederum mit einem Anschlussdraht verbunden ist.

Die Druckschrift EP 0 161 895 A2 beinhaltet eine Drucksensorstruktur, wobei von einem Widerstandsmaterial umhüllte elektrische Leiter in Form von Reihen und Spalten auf einen Stoff aufgenäht wurden. Durch die in Form eines Gitters angeordneten elektrischen Leiter entsteht eine Matrix von einander überschneidenden Punkten. Wenn Druck auf einen solchen Überschneidungspunkt ausgeübt wird, wird das Widerstandsmaterial zwischen den zwei elektrischen Leitern komprimiert. Dies führt zu einer Erhöhung des Kontaktbereiches zwischen den Reihen und Spalten, verkürzt den Abstand zwischen den elektrischen Leitern und führt somit zu einem erfassbaren elektrischen Messsignal.

Gemäß der Druckschrift DE 10360 309 A1 ist vorgesehen, elektrisch leitfähige Gummifäden auf oder in Textilien zu bringen, wodurch Dehnungssensoren ausgebildet werden sollen. Die aus elektrisch leitfähigen Gummifäden bestehenden Sensorelemente sind mit unterschiedlicher geometrischer Anordnung auf oder in einem textilen Flächengebilde verankert. Zur Verankerung können textiltypische und/oder andere Verlegungstechniken, wie beispielsweise Sticken, angewendet werden. Die Kontaktierung der vorgeschlagenen Strukturen soll mit standardisierten Verbindungselementen, wie Druckknöpfen, Steckverbindern oder anderen textilkompatiblen Verbindungen wie Reißverschlüssen oder Klettverschlüssen, erfolgen.

Die Druckschrift US 2003/005 6599 A1 empfiehlt, einen Faden oder einen Draht aus einer Form-Gedächtnis-Legierung, vorzugsweise einer pseudoelastischen Legierung wie Nitinol, durch Weben oder Nähen in einen Stoff einzubringen und hiermit einen Dehnungssensor auszubilden.

Die Druckschrift US 2005/0146076 A1 beschreibt dreidimensionale Textilien mit integrierten Systemen, Vorrichtungen und/oder Netzwerken. In einer Ausführungsform wird hierzu ein elektrischer Leiter in ein Basismaterial genäht, wobei die so erzeugte Struktur beispielsweise nachfolgend in eine Polymermatrix eingebettet werden kann. Ferner ist in der Druckschrift erwähnt, dass die elektrischen Leiter so in das Basismaterial eingebracht werden können, dass sie nicht isoliert sind und somit an Kreuzungspunkten eine gegenseitige Kontaktierung zur Ausbildung einer leitenden Verbindung erlauben.

Die Druckschrift US 2001/0043200 A1 beschreibt einen aus Stoff hergestellten Detektor, welcher zwei plattenförmige Teilebenen aus Metall aufweist, zwischen welchen ein netzartiger Isolator vorgesehen ist. Wird beispielsweise Druck auf eine der Metallebenen ausgeübt, kann auf der jeweils gegenüberliegenden Ebene ein Messsignal detektiert werden. In einer beschriebenen Ausführungsform sind die Teilebenen des Detektors aus Stoffen mit elektrisch leitfähigen Elementen ausgebildet. Die leitfähigen Elemente sind in den Stoff gewebt.

Es ist daher die Aufgabe der vorliegenden Erfindung, ein Verfahren zum Herstellen einer Signalstruktur für die Herstellung eines Dehnungs-, Druck- und/oder Bruchsensors oder Aktors zur Verfügung zu stellen, welches eine einfache und kostengünstige Herstellung vielfältiger Gestaltungsmöglichkeiten für Dehnungs-, Druck- und/oder Bruchsensoren oder Aktoren ermöglicht, wobei das Verfahren sowohl zur Fertigung individueller Losgrößen als auch für die Herstellung von Massenbauteilen geeignet sein soll.

Die Aufgabe wird durch ein Verfahren zum Herstellen einer Signalstruktur für die Herstellung eines Dehnungs-, Druck- und/oder Bruchsensors oder Aktors gelöst, wobei das Verfahren folgende Schritte aufweist: Befestigen eines auf Basismaterial verlegten elektrischen Leiters mittels Stricken auf dem Basismaterial, wobei der elektrische Leiter in Großsticktechnik oder in Ein- bzw. Mehrkopfsticktechnik hergestellt wird und wobei als Basismaterial ein textiles Material, ein Kunststoff, ein Kunststoffhaltiger Faserverbundstoff, ein Kunststoffhaltiges Vlies, eine Folie, ein Schaum, ein Glasgelege, ein Glasvlies und/oder eine Verstärkungsfaserstruktur verwendet wird, wobei sich der elektrische Leiter wenigstens entlang einer Länge des Basismaterials erstreckt; Einbetten des bestickten Basismaterials in ein härtbares Trägermaterial; und Härten des Trägermaterials unter Ausbildung einer das Basismaterial mit dem elektrischen Leiter enthaltenden Matrix.

Das erfindungsgemäße Verfahren ermöglicht es, den elektrischen Leiter in vielfaltigen Formen auf einfache Weise in oder auf dem Basismaterial durch Sticken einzubringen bzw. zu fixieren, wodurch besonders für die Herstellung von Dehnungs-, Druck- und/oder Bruchsensoren aber auch für die Herstellung von Aktoren geeignete elektrische Strukturen hergestellt werden können. Ferner kann die durch Sticken hergestellte Form des elektrischen Leiters bzw. der durch Sticken auf dem Basismaterial befestigte elektrische Leiter in dem hartbaren Trägermaterial fixiert werden, so dass eine stabile Festkörpermatrix mit der durch den elektrischen Leiter ausgebildeten Signalstruktur für die Herstellung von Dehnungs-, Druck- und/oder Bruchsensoren oder Aktoren sowohl in kleinen Stückzahlen als auch in großen Losgrößen bereitgestellt werden kann, wobei das entstehende Halbzeug bzw. der Sensor oder Aktor sowohl elastisch als auch fest ausgebildet sein kann.

Es ist besonders von Vorteil, wenn in dem erfindungsgemäßen Verfahren mehrere elektrische Leiter gestickt werden, die zumindest teilweise durch Sticken miteinander verbunden werden. Auf diese Weise können durch das erfindungsgemäße Verfahren komplexe elektrische Strukturen für Dehnungs-, Druck- und/oder Bruchsensoren oder Aktoren hergestellt werden.

Es hat sich als günstig erwiesen, wenn der elektrische Leiter durch Nähen, Sticken, Kleben, Schweißen, Ultraschall, mit leitfähigem Epoxidharz oder durch Löten kontaktiert wird. Durch Nahen, Sticken, Kleben, Schweißen, Ultraschall, mit leitfähigem Epoxidharz oder durch Löten hergestellte Kontakte sind bei Verwendung des erfindungsgemäßen Verfahrens besonders vorteilhaft, um stabile und langlebige Kontakte herzustellen.

In einer Weiterbildung der vorliegenden Erfindung wird der elektrische Leiter durch einen weiteren metallischen Leiter zur Kontaktierung überstickt. So kann beispielsweise zunächst ein elektrischer Leiter in Form einen Konstantandrahtes in dem Basismaterial verlegt werden und daraufhin mit einem weiteren metallischen Leiter, wie einem Kupferdraht, rein mechanisch zur Kontaktierung überstickt werden. Hierbei entsteht der Kontakt durch den Kraftschluss zwischen dem elektrischen Leiter und dem weiteren metallischen Leiter.

Erfindungsgemäß wird wenigstens ein zusätzlicher Faden zur Befestigung des elektrischen Leiters auf das Basismaterial gestickt. Damit kann der elektrische Leiter durch den zusätzlich vorgesehenen Stickfaden vorteilhaft in dem Basismaterial fixiert werden.

Die oben genannten vorteilhaften Eigenschaften, die sich einerseits durch die Kontaktierung des elektrischen Leiters durch einen weiteren elektrischen Leiter und andererseits durch die Befestigung des elektrischen Leiters durch einen zusätzlichen Faden ergeben, resultieren in einem besonders vorteilhaften Mehrfadensystem, in welchem beispielsweise durch den Einsatz von drei Fäden, das heißt beispielsweise einem verlegten Konstantandraht, der mit einem Stickfaden befestigt und mit einem Kupferdraht zur Kontaktierung überstickt ist, eine hochqualitative Signalstruktur für verschiedenste Einsatzmöglichkeiten als Dehnungs-, Druck- und/oder Bruchsensor oder Aktor geschaffen werden kann.

Gemäß einer Ausführungsvariante der Erfindung wird als Trägermaterial ein nach dem Härten zumindest teilweise elastisches Material verwendet. Auf diese Weise kann eine elastische Matrix erzeugt werden, welche beispielsweise als Blattfeder oder Torsionsfeder ausgebildet werden kann, um einen Dehnungs- und/oder Drucksensor oder einen Aktor herzustellen.

Entsprechend einer anderen Variante der Erfindung wird als Trägermaterial ein nach dem Harten nicht elastisches Material verwendet. Somit kann eine nicht elastische Matrix hergestellt werden, welche sich insbesondere für die Herstellung eines Bruchüberwachungssensors eignet.

Gemäß einer vorteilhaften Ausführungsform der Erfindung wird der elektrische Leiter in einen kunststoffhaltigen Faserverbundwerkstoff eingebracht. Kunststoffe wie Duroplaste, Thermoplaste oder Elastomere haben den Vorteil, dass sie sich gut gießen oder spritzen lassen, so dass hiermit der elektrische Leiter auf einfache Weise in das Trägermaterial eingebettet werden kann. Faserverbundwerkstoffe besitzen durch ihren Aufbau aus einer bettenden Matrix und verstärkenden Fasern eine sehr gute Festigkeit und sind damit hochgradig beanspruchbar. Somit kann eine Matrix mit einer hohen Lebensdauer hergestellt werden.

Gemäß einem günstigen Beispiel der Erfindung wird als Basismaterial ein textiles Material, ein Kunststoff, ein kunststoffhaltiges Material, eine Folie, ein Schaum, ein Glasgewebe, ein Glasgelege oder ein Glasvlies verwendet. In einer vorteilhaften Variante der Erfindung kann der elektrische Leiter in einen kunststoffhaltigen Faserverbund eingebracht werden. Beispielsweise können auch kunststoffhaltige Vliese, wie duroplastische oder thermoplastische Vliese, als Stickgrund verwendet werden, in welche beispielsweise ein Widerstandsdraht einfach eingebracht werden kann.

Gemäß einer anderen Variante der Erfindung kann als Basismaterial eine Verstärkungsfaserstruktur verwendet werden. Hierfür kann eine Faserverbundstruktur mit oder auch ohne kunststoffhaltiges Material genutzt werden. Beispielsweise kann somit durch Sticken eine Signalstruktur in eine Glasfasertextilstruktur eingebracht werden, welche anschließend mit einem Duroplast getränkt werden kann.

Weiterhin ist es empfehlenswert, wenn für das Basismaterial und das Trägermaterial zumindest teilweise gleiche Kunststoffmaterialien verwendet werden. Da das Basismaterial in das Trägermaterial eingebracht wird bzw. das Trägermaterial das Basismaterial in der Matrix umgibt, ist bei Verwendung gleicher Materialien ein sehr gutes Fließverhalten im Endprodukt und eine sehr gute Haftung der Materialien aneinander erzielbar. Somit kann eine Delaminierung der Matrix weitgehend verhindert werden.

Entsprechend einer Ausführungsvariante der Erfindung wird der elektrische Leiter in zumindest einer Richtung mäanderförmig gestickt. Mäanderförmige Strukturen eignen sich besonders gut für die Herstellung von Strukturen zur Dehnungsmessung, die für Dehnungs- und/oder Drucksensoren verwendet werden können.

Gemäß einem weiteren vorteilhaften Beispiel der Erfindung wird der elektrische Leiter in der Richtung der Materialstärke des Basismaterials zumindest teilweise in einem Winkel von etwa 45° bis etwa 85° gestickt. Hierzu verwendet man Ein- bzw. Mehrkopfsticktechnik. Der von herkömmlichen, beim Sticken verwendeten 90°-Winkeln abweichende Winkel von etwa 45° bis etwa 85° ermöglicht es, den elektrischen Leiter über längere Strecken in vertikaler Ausrichtung in dem Basismaterial vorzusehen. Damit kann ein ausreichend großer Widerstand in der Höhenrichtung des Basismaterials zur Verfügung gestellt werden, um ein entsprechend hohes Auswertesignal einer Änderung des elektrischen Widerstandes des elektrischen Leiters in Höhenrichtung des Basismaterials erfassen zu können.

Das erfindungsgemäße Verfahren kann besonders effektiv und kostengünstig gestaltet werden, wenn nach einem Stickvorgang ein zum Sticken verwendeter elektrisch leitfähiger Draht oder Faden so durchtrennt wird, dass seine Klemmung in einer Stickmaschine aufrecht erhalten bleibt. Somit kann der durchtrennte Draht oder Faden sofort bei einem neuen Stickvorgang eingesetzt werden, ohne ihn erneut klemmen zu müssen.

Das erfindungsgemäße Verfahren kann ferner besonders effektiv durchgeführt werden, wenn der elektrische Leiter mit einer Schiffchenstickmaschine gestickt wird. Großstickmaschinen bzw. Schiffchenstickmaschinen weisen einen sehr synchronen Arbeitsverlauf und einen geringen Nadelabstand auf, wodurch das erfindungsgemäße Verfahren sehr schnell und hochgradig reproduzierbar ausgeführt werden kann. Grundsätzlich kann jedoch der elektrische Leiter sowohl in Groß- als auch in Kleinsticktechnik hergestellt werden, wobei sich die Ein- bzw. Mehrkopfsticktechnik insbesondere für die Herstellung von Signalstrukturen eignet, in welchen in vertikaler Richtung von 90° abweichende Winkel gestickt werden sollen.

Günstigerweise wird das bestickte Basismaterial mit dem Trägermaterial umgossen, umspritzt oder getränkt. So können beispielsweise Thermo- oder Duroplaste benutzt werden, um das bestickte textile Material in eine Festkörperstruktur einzubinden und darin zu fixieren. Es ist möglich, dass beim Eingießen oder Einspritzen das bestickte textile Material bzw. der elektrische Leiter die Form geringfügig verändert. Der Gieß- bzw. Spritzprozess lässt sich jedoch so steuern, dass die Signalstruktur für die Herstellung eines Dehnungs-, Druck- und/oder Bruchsensors definiert hergestellt werden kann.

Entsprechend einer bevorzugten Weiterbildung der vorliegenden Erfindung wird der elektrische Leiter so genäht oder gestickt, dass er eine Antennenstruktur ausbildet, oder an den elektrischen Leiter wird eine Antennenstruktur angestickt. Somit ist es möglich, durch die Signalstruktur Signale zu senden oder zu empfangen, ohne dass der elektrische Leiter direkt kontaktiert werden muss.

Hierfür ist es hilfreich, wenn die Signalstruktur telemetrisch mit einem Empfänger verbunden wird. So kann der Empfänger durch die an dem elektrischen Leiter vorgesehene Antennenstruktur Signale von der Signalstruktur empfangen.

Bei einer solchen Ausbildung der Erfindung ist es darüber hinaus von Vorteil, wenn die telemetrische Verbindung durch eine in das Basismaterial und/oder das Trägermaterial eingebrachte Piezostruktur mit Energie versorgt wird. Somit kann ein autark arbeitendes System zur Verfügung gestellt werden, wobei die Signalstruktur Signale erfassen und senden kann und darüber hinaus durch die Piezostruktur mit Energie versorgt wird.

Gemäß einer Weiterbildung der Erfindung kann die Signalstruktur einlaminiert und/oder verpresst werden. Somit kann erfindungsgemäß ein kompaktes Modul zur Verfügung gestellt werden.

In einer weiteren vorteilhaften Ausführungsform der vorliegenden Erfindung wird der wenigstens eine elektrische Leiter in eine Preform gestickt an der Preform durch Sticken befestigt. Auf diese Weise kann ein strukturintegrierter Sensor oder Aktor in eine Preform eingebracht werden.

Hierbei ist es besonders günstig, wenn durch den wenigstens einen gestickten oder durch Sticken befestigten elektrischen Leiter mehrere Lagen der Preform miteinander verbunden werden. So kann gleichzeitig mit dem Einbringen oder Befestigen eines strukturintegrierten Sensors oder Aktors eine Montage erfolgen, in welcher mehrere Faserverbundschichten einer Preform miteinander verbunden werden können.

In einer weiteren Ausführungsvariante der vorliegenden Erfindung wird als Material für den wenigstens einen elektrischen Leiter eine Form-Gedächtnis-Legierung verwendet. Mit dieser Verfahrensvariante kann vorteilhaft ein Aktor, der auf Grundlage des Form-Gedächtnis-Effektes arbeitet, erzeugt werden.

Im Folgenden wird das erfindungsgemäße Verfahren anhand eines in den Figuren gezeigten Beispiels näher erläutert, wobei
- Figur 1: schematisch ein Sticken eines elektrischen Leiters in ein textiles Material zeigt; und
- Figur 2: schematisch eine Signalstruktur mit einer Matrix zeigt, welche einen darin eingebrachten gestickten elektrischen Leiter aufweist.

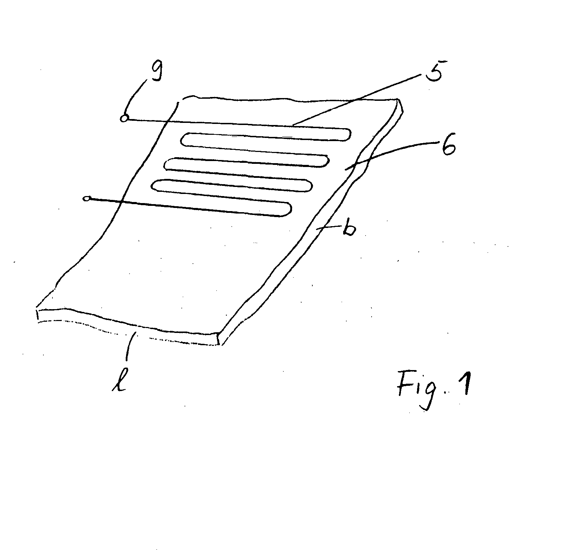

Figur 1 zeigt schematisch einen Stickvorgang eines elektrischen Leiters 5 in ein Basismaterial 6. Der elektrische Leiter 5 erstreckt sich entlang einer Länge 1 und einer Breite b im Wesentlichen zweidimensional in einer Lateralrichtung des Basismaterials 6. In dem in Figur 1 gezeigten Beispiel ist der elektrische Leiter 5 mäanderförmig in das Basismaterial 6 gestickt.

In anderen, nicht gezeigten Ausführungsformen der Erfindung kann der elektrische Leiter 5 auch in einer anderen Form auf dem Basismaterial 6 durch Sticken befestigt sein. Beispielsweise kann der elektrische Leiter 5, geradlinig in Form einer Spirale, wellenförmig, zickzackförmig oder in einer anderen geeigneten Form ausgebildet sein, die es ermöglicht, den elektrischen Leiter 5 gleichmäßig auf einer Fläche oder in einem Volumen zu verteilen, wobei vorzugsweise die Struktur so gestaltet sein sollte, dass eine Biegungsachse der gestickten Struktur in einer Richtung liegt oder der elektrische Leiter (5) umstickbar ist.

Der elektrische Leiter 5 besteht aus wenigstens einem elektrisch leitfähigen oder halbleitenden Material und kann in einer speziellen Ausführungsform der Erfindung auch aus einer Form-Gedächtnis-Legierung ausgebildet sein, um einen Aktor auszubilden.

Es ist möglich, dass die elektrischen Leiter 5 durch Sticken miteinander verbunden werden. So kann beispielsweise ein elektrischer Leiter 5 durch einen weiteren elektrischen Leiter 5 zur Kontaktierung überstickt werden. Beispielsweise kann ein Konstantandraht in dem Basismaterial 6 verlegt und mit einem Kupferdraht zur Kontaktierung rein mechanisch überstickt werden, wobei es durch den Kraftschluss zwischen den beiden elektrischen Leitern zu einem elektrischen Kontakt kommt. Dieses Verfahren eignet sich insbesondere im Zusammenhang mit dem Tailor-Fibre-Placement-Verfahren.

Ferner ist es möglich, den elektrischen Leiter 5 auf dem Basismaterial 6 vorzuverlegen und nachfolgend mit einem weiteren Stickfaden in oder auf dem Basismaterial 6 zu befestigen. So kann ein beispielsweise aus drei Faden bestehendes Mehrfadensystem zur Verfügung gestellt werden, in welchem wenigstens ein Faden als elektrischer Leiter 5 in oder auf dem Basismaterial 6 z. B. geradlinig verlegt wird, der elektrische Leiter 5 durch einen zusätzlichen auf dem Basismaterial 6 befestigt wird und der elektrische Leiter 5 durch wenigstens einen weiteren elektrischen Leiter (Mehrfadensystem), der auch aus einem anderen Material als der elektrische Leiter 5 bestehen kann, durch Übersticken befestigt und/oder kontaktiert wird.

Diese Vorgehensweise kann in Zusammenhang mit den sogenannten Tailer-Fiber-Placement-Verfahren eingesetzt werden und hat den Vorteil, dass der elektrische Leiter 5 geradlinig vorverlegt werden kann und auch beim Befestigen durch Sticken nicht verbogen wird, was für bestimmte Anwendungsfälle der hergestellten Signalstruktur wichtig sein kann.

Das Basismaterial 6 bildet einen Stickgrund. Der Stickgrund ist in dem gezeigten Beispiel aus einem thermoplastischen Vlies ausgebildet und kann in anderen Ausführungsformen der Erfindung auch aus einem duroplastischen Vlies oder einem e-lastomerhaltigen Vlies ausgebildet sein.

Als Basismaterial 6 kann auch ein Preform verwendet werden, in welches wenigstens ein elektrischer Leiter 5 gestickt oder wobei wenigstens ein elektrischer Leiter 5 an der Preform durch Sticken befestigt wird. Dabei können durch den wenigstens einen durch Sticken befestigten elektrischen Leiter 5 mehrere Lagen der Preform miteinander verbunden werden. Auf diese Weise kann gleichzeitig mit dem Einbringen eines strukturintegrierten Sensors eine Montage erfolgen, bei welcher mehrere Faserverbundschichten der Preform miteinander verbunden werden.

Das Basismaterial 6 ist in dem in Figur 1 gezeigten Beispiel ein textiles Material, das aus einem einzigen Material besteht, kann aber in anderen, nicht gezeigten Ausführungsvarianten der Erfindung auch mehrlagig oder als Vlies bzw. als Verstärkungsstruktur ausgebildet sein, die anschließend mit einer geeigneten Matrix benetzt wird. Beispielsweise kann das Basismaterial 6 in einer Kombination von textilen Lagen und Schaumstoff ausgebildet sein. Als Basismaterial 6 kommt ferner ein Kunststoff, ein kunststoffhaltiges Material, eine Folie, ein Schaum, ein Glasgewebe, ein Glasgelege oder ein Glasvlies in Betracht. Beispielsweise kann der elektrische Leiter 5 in einen kunststoffhaltigen Faserverbundstoff eingebracht werden. Als Basismaterial 6 kann beispielsweise in anderen Anwendungen ein kunststoffhaltiges Vlies oder eine Verstärkungsfaserstruktur verwendet werden.

Der elektrische Leiter 5 in Figur 1 ist aus einem Widerstandsdraht aus Konstantan ausgebildet. Anstelle von dem gezeigten Ganzdraht kann jedoch auch ein anderes geeignetes elektrisch leitfähiges Stickgarn für das Sticken des elektrischen Leiters 5 eingesetzt werden. Beispielsweise ist der Einsatz eines elektrisch leitfähigen Fadens oder einer Fadenkombination möglich. Zur Herstellung eines solchen elektrisch leitfähigen Fadens wird typischerweise eine Seele mit einem elektrisch leitfähigen Material umwunden. Ein solcher Faden besitzt jedoch gegenüber einem Draht den Nachteil, dass die Umwindung an einem Öhr einer Nadel einer Stickmaschine aufdriffeln oder aufreißen kann, so dass es hierfür notwendig sein kann, das erfindungsgemäße Verfahren an den Einsatz von Fäden zur Herstellung des elektrischen Leiters 5 entsprechend anzupassen.

Grundsätzlich können zum Sticken des elektrischen Leiters 5 in das Basismaterial 6 im Stand der Technik vorhandene Sticktechnologien und -systeme verwendet werden. Aufgrund des Einsatzes von Drähten, welche sowohl aus metallischen als auch aus Halbleitermaterialien ausgebildet sein können, kann es notwendig sein, für die Nadeln bereits bekannter Stickmaschinen gehärtete Materialien einzusetzen.

Wie in Figur 1 gezeigt, ist der elektrische Leiter 5 über Kontakte 9 kontaktierbar. Die Kontaktierung kann mittels Sticken, Kleben, Schweißen, Ultraschall, mit einem leitfähigen Epoxidharz oder auch durch Löten erfolgen.

Ist der elektrische Leiter 5 auf das Basismaterial 6 gestickt worden, wird der für das Sticken des elektrischen Leiters 5 verwendete Draht oder Faden vorzugsweise so durchtrennt bzw. abgeschnitten, dass seine Klemmung in der Stickmaschine erhalten bleibt.

Der elektrische Leiter 5 kann in das Basismaterial 6 mit Einkopf- und Mehrkopfstickautomaten als auch mit Großsticktechnik wie einer Schiffchenstickmaschine gestickt werden. Insbesondere der Einsatz der Großsticktechnik erlaubt es, bei dem erfindungsgemäßen Verfahren einen synchronen Arbeitsverlauf zur Verfügung zu stellen, um effizient und reproduzierbar für die Herstellung von Dehnungs-, Druck- und/oder Bruchsensoren geeignete Signalstrukturen mit dem erfindungsgemäßen Verfahren herzustellen.

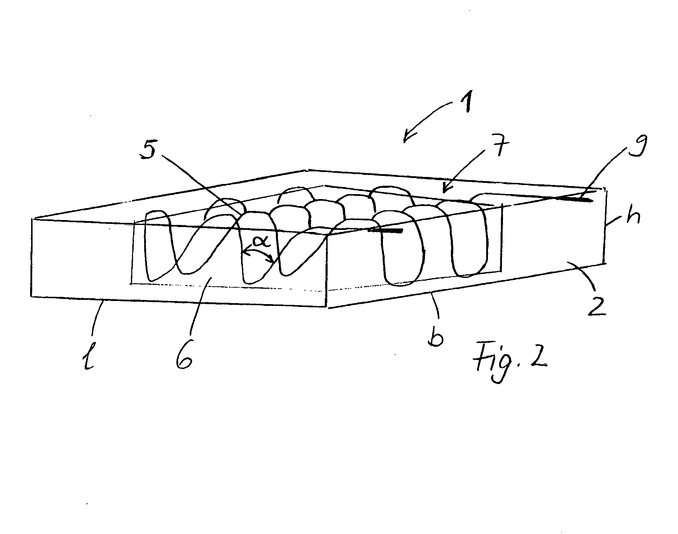

Figur 2 zeigt schematisch einen mit Hilfe des erfindungsgemäßen Verfahrens hergestellten, möglichen Aufbau einer Signalstruktur 1 für die Herstellung eines Dehnungs-, Druck- und/oder Bruchsensors oder eines Aktors, wie eines Schwingers, eines Bimetalls, eines Relais oder dergleichen. Das erfindungsgemäße Verfahren kann auch zur Herstellung integrierter Sensor-/Aktorstrukturen verwendet werden.

Zur Herstellung der Signalstruktur 1 wurde zunächst ein elektrischer Leiter 5 dreidimensional, das heißt in einer Längenrichtung I, einer Breitenrichtung b und einer Höhenrichtung h in ein Basismaterial 6 gestickt. Die Materialstärke h des Basismaterials 6 aus Figur 2 ist ≥ 0,3 cm. Diese Materialdicke ermöglicht es, dass der elektrische Leiter 5 eine für Sensoranwendungen ausreichende Ausdehnung in der Höhenrichtung h des Basismaterials 6 besitzt, um beispielsweise die Signalstruktur 1 für Druckmessungen anwenden zu können. Grundsätzlich kann das Basismaterial 6 jedoch auch eine größere oder geringere Dicke als 0,3 cm, wie beispielsweise ≥ 0,5 cm, aufweisen. Besonders geeignete Materialdicken liegen im Bereich von etwa 0,3 cm bis etwa 1 cm. Über die Veränderung der Stickgrundstärke des Basismaterials 6 kann die Höhe des eingestickten elektrischen Leiters 5 oder dessen Höhenverlauf bestimmt werden.

Wie in Figur 2 zu sehen, ist der elektrische Leiter 5 in der Richtung der Materialstärke h des Basismaterials 6 neben der typischen 90°-Richtung zumindest teilweise in einem Winkel a von etwa 45° bis etwa 85° gestickt. Somit kann der elektrische Leiter 5 über eine große Fläche der Signalstruktur 1 dreidimensional mit einer geeigneten Höhenausdehnung ausgebildet werden.

Wie aus Figur 2 hervorgeht, wird der elektrische Leiter 5, der auf das Basismaterial 6 gestickt ist, in ein Trägermaterial 7 eingebracht bzw. eingebettet, um eine Festkörpermatrix 2 auszubilden, in welcher der wenigstens eine elektrische Leiter 5 integriert ist. Das Einbringen des bestickten textilen Materials erfolgt in ein härtbares Trägermaterial 7, mit welchem das bestickte Basismaterial 6 umgossen oder umspritzt werden kann.

Wenn die Signalstruktur 1 für die Herstellung eines Dehnungs- oder Drucksensors verwendet werden soll, ist als Trägermaterial 7 ein nach dem Harten zumindest teilweise elastisches Material zu verwenden. Für die Herstellung von Bruchsensoren ist hingegen ein nach dem Härten nicht elastisches Material als Trägermaterial 7 zu verwenden.

In dem in Figur 2 gezeigten Beispiel bestehen sowohl das Basismaterial 6 als auch das Trägermaterial aus den gleichen Kunststoffmaterialien. Indem gleiche Materialien für das Basismaterial 6 und das Trägermaterial 7 verwendet werden, kann beim Herstellen der Matrix 2 ein gutes Fließverhalten zwischen den Materialien erzielt werden. Auch haften gleiche Materialien gut aneinander.

Grundsätzlich ist es auch möglich, verschiedene Materialien für das Basismaterial 6 und das Trägermaterial 7 einzusetzen. Hierbei können auch Haftvermittler zum Einsatz kommen. Bei der Verwendung von thermoplastischen Materialien kann die Haftung durch eine entsprechend hohe Temperatur beim Gieß- oder Spritzprozess erhöht werden. Als Matrix 2 kommt grundsätzlich auch ein Elastomermaterial bzw. ein kunststoffhaltiger Faserverbundwerkstoff in Betracht.

## Patentansprüche

1. Verfahren zum Herstellen einer Signalstruktur (1) für die Herstellung eines Dehnungs-, Druck- und/oder Bruchsensors oder Aktors, wobei das Verfahren folgende Schritte aufweist:
- Befestigen wenigstens eines auf Basismaterial (6) verlegten elektrischen Leiters (5) mittels Sticken auf dem Basismaterial (6), wobei der elektrische Leiter (5) in Großsticktechnik oder in Ein- bzw. Mehrkopfsticktechnik hergestellt wird und wobei als Basismaterial (6) ein textiles Material, ein Kunststoff, ein kunststoffhaltiger Faserverbundwerkstoff, ein kunststoffhaltiges Vlies, eine Folie, ein Schaum, ein Glasgewebe, ein Glasgelege, ein Glasvlies und/oder eine Verstärkungsfaserstruktur verwendet wird, wobei sich der elektrische Leiter (5) wenigstens entlang einer Länge (I) des Basismaterials (6) erstreckt;
- Einbetten des bestickten Basismaterials (6) in ein härtbares Trägermaterial (7); und
- Härten des Trägermaterials (7) unter Ausbildung einer das Basismaterial (6) mit dem elektrischen Leiter (5) enthaltenden Festkörpermatrix (2).

2. Verfahren nach Anspruch 1, **dadurch gekennzeichnet, dass** mehrere elektrische Leiter (5) zumindest teilweise durch Sticken miteinander verbunden werden.

3. Verfahren nach Anspruch 1 oder 2, **dadurch gekennzeichnet, dass** der wenigstens eine elektrische Leiter (5) durch Nähen, Sticken, Kleben Schweißen, Ultraschall, mit leitfähigem Epoxidharz oder durch Löten kontaktiert wird.

4. Verfahren nach wenigstens einem der vorhergehenden Ansprüche, **dadurch gekennzeichnet, dass** als Trägermaterial (7) ein nach dem Härten zumindest teilweise elastisches Material verwendet wird.

5. Verfahren nach wenigstens einem der Ansprüche 1 bis 3, **dadurch gekennzeichnet, dass** als Trägermaterial (7) ein nach dem Härten nicht elastisches Material verwendet wird.

6. Verfahren nach wenigstens einem der vorhergehenden Ansprüche, **dadurch gekennzeichnet, dass** für das Basismaterial (6) und das Trägermaterial (7) zumindest teilweise gleiche Kunststoffmaterialien verwendet werden.

7. Verfahren nach wenigstens einem der vorhergehenden Ansprüche, **dadurch gekennzeichnet, dass** der elektrische Leiter (5) mäanderförmig auf dem Basismaterial (6) durch Sticken befestigt wird.

8. Verfahren nach wenigstens einem der vorhergehenden Ansprüche, **dadurch gekennzeichnet, dass** nach einem Stickvorgang ein zum Sticken verwendeter elektrisch leitfähiger Draht oder Faden so durchtrennt wird, dass seine Klemmung in der Stickmaschine aufrecht erhalten bleibt.

9. Verfahren nach wenigstens einem der vorhergehenden Ansprüche, **dadurch gekennzeichnet, dass** das bestickte Basismaterial (6) mit dem Trägermaterial umgossen, umspritzt oder getränkt wird.

10. Verfahren nach wenigstens einem der vorhergehenden Ansprüche, **dadurch gekennzeichnet, dass** an den elektrischen Leiter (5) eine Antennenstruktur angestickt oder angenäht wird.

11. Verfahren nach Anspruch 10, **dadurch gekennzeichnet, dass** die Signalstruktur (1) telemetrisch mit einem Empfänger verbunden wird.

12. Verfahren nach Anspruch 11, **dadurch gekennzeichnet, dass** die telemetrische Verbindung durch eine in das Basismaterial (6) und/oder das Trägermaterial (7) eingebrachte Piezostruktur mit Energie versorgt wird.

13. Verfahren nach einem der vorhergehenden Ansprüche, **dadurch gekennzeichnet, dass** die Signalstruktur (1) einlaminiert und/oder verpresst wird.

14. Verfahren nach einem der vorhergehenden Ansprüche, **dadurch gekennzeichnet, dass** der wenigstens eine elektrische Leiter (5) an einer Preform durch Sticken befestigt wird.

15. Verfahren nach Anspruch 14, **dadurch gekennzeichnet, dass** durch den wenigstens einen durch Sticken befestigten Leiter (5) mehrere Lagen der Preform miteinander verbunden werden.

16. Verfahren nach einem der vorhergehenden Ansprüche, **dadurch gekennzeichnet, dass** als Material für den wenigstens einen elektrischen Leiter (5) eine Form-Gedächtnis-Legierung verwendet wird.

## Claims

1. Method for producing a signal structure (1) for the production of a strain, pressure, and/or break sensor or actuator, wherein the method comprises the following steps:
- fixing of at least one electrical conductor (5) arranged on a base material (6) by means of embroidering on the base material (6), wherein the electrical conductor (5) is produced by large embroidery technique or by an single-head respectively multi-head embroidery technique, and wherein as base material (6) a textile material, a synthetic material, a synthetic fiber composite, a synthetic nonwoven, a foil, a foam, a fiber glass, a glass laid compound, a glass nonwoven, and/or a gain fiber structure is used, wherein the electrical conductor (5) extends at least along a length (I) of the base material (6);
- placing the embroidered base material (6) in a hardenable carrier material (7); and
- hardening of the carrier material (7) under formation of a solid matrix (2) containing the base material (6) with the electrical conductor (5).

2. Method of claim 1, **characterized in that** several electrical conductors (5) are at least partly connected to each other by embroidering.

3. Method of claim 1 or 2, **characterized in that** the at least one electrical conductor (5) is contacted by sewing, embroidering, gluing, welding, ultrasonic sound, with conductible epoxy resin or by soldering.

4. Method of at least one of the preceding claims, **characterized in that** as carrier material (7), a material is used which is at least partly elastic after hardening.

5. Method of at least one of the claims 1 to 3, **characterized in that** as carrier material (7), a material is used which is inelastic after hardening.

6. Method of at least one of the preceding claims, **characterized in that** at least partly same synthetic materials are used for the base material (6) and the carrier material (7).

7. Method of at least one of the preceding claims, **characterized in that** the electrical conductor (5) is fixed in a meandering pattern on the base material (6) by embroidering.

8. Method of at least one of the preceding claims, **characterized in that** after an embroidering step, an electrically conductive wire or thread used to embroider is cut such that the clamping of said wire or thread is sustained in an embroidering machine.

9. Method of at least one of the preceding claims, **characterized in that** the embroidered base material (6) is cast, extrusion-coated, or soaked with the carrier material.

10. Method of at least one of the preceding claims, **characterized in that** an antenna structure is sewn or embroidered to the electrical conductor (5).

11. Method of claim 10, **characterized in that** the signal structure (1) is telemetrically connected to a receiver.

12. Method of claim 11, **characterized in that** the telemetric connection is supplied with energy by a piezo structure provided in the base material (6) and/or the carrier material (7).

13. Method of one of the preceding claims, **characterized in that** the signal structure (1) is laminated and/or pressed.

14. Method of one of the preceding claims, **characterized in that** the at least one electrical conductor (5) is fixed to a preform by embroidering.

15. Method of claim 14, **characterized in that** by the at least one conductor (5) fixed by embroidering, several layers of the preform are connected to each other.

16. Method of one of the preceding claims, **characterized in that** a shape memory alloy is used as material for the at least one electrical conductor (5).

## Revendications

1. Procédé de fabrication d'une structure de signaux (1) pour la fabrication d'un capteur ou actionneur d'étirement, de pression et/ou de rupture, le procédé présentant les étapes suivantes :
- fixation d'au moins un conducteur électrique (5) posé sur un matériau de base (6) au moyen de la broderie sur le matériau de base (6), le conducteur électrique (5) étant fabriqué par broderie à l'échelon industriel ou selon la technique de broderie à tête unique ou respectivement multiple, et un matériau textile, une matière plastique, un matériau composite à fibres contenant de la matière plastique, un voile contenant de la matière plastique, une feuille, une mousse, un tissu de verre, une nappe de verre, un voile de verre et/ou une structure à fibres de renfort étant utilisés comme matériau de base (6), le conducteur électrique (5) s'étendant au moins le long d'une longueur (I) du matériau de base (6) ;
- incorporation du matériau de base (6) brodé dans un matériau porteur (7) durcissable ; et
- durcissement du matériau porteur (7) avec constitution d'une matrice à l'état solide (2) contenant le matériau de base (6) avec le conducteur électrique (5).

2. Procédé selon la revendication 1, **caractérisé en ce que** plusieurs conducteurs électriques (5) sont raccordés les uns aux autres au moins partiellement par broderie.

3. Procédé selon la revendication 1 ou 2, **caractérisé en ce que** le conducteur électrique (5) au moins au nombre de un est mis en contact par couture, broderie, collage, soudage, ultrasons, avec une résine époxy conductrice ou par brasage.

4. Procédé selon au moins l'une des revendications précédentes, **caractérisé en ce qu'**un matériau au moins partiellement élastique après le durcissement est utilisé comme matériau porteur (7).

5. Procédé selon au moins l'une des revendications 1 à 3, **caractérisé en ce qu'**un matériau non élastique après le durcissement est utilisé comme matériau porteur (7).

6. Procédé selon au moins l'une des revendications précédentes, **caractérisé en ce que** des matériaux en matière plastique au moins partiellement identiques sont utilisés pour le matériau de base (6) et pour le matériau porteur (7).

7. Procédé selon au moins l'une des revendications précédentes, **caractérisé en ce que** le conducteur électrique (5) est fixé par broderie sur le matériau de base (6) en formant des méandres.

8. Procédé selon au moins l'une des revendications précédentes, **caractérisé en ce que**, après un processus de broderie, un fil métallique ou un fil électriquement conducteur utilisé pour la broderie est coupé de telle sorte que son serrage demeure préservé dans la machine à broder.

9. Procédé selon au moins l'une des revendications précédentes, **caractérisé en ce que** le matériau de base (6) brodé est enrobé, aspergé ou imbibé avec le matériau porteur.

10. Procédé selon au moins l'une des revendications précédentes, **caractérisé en ce qu'**une structure d'antenne est appliquée par broderie ou couture sur le conducteur électrique (5).

11. Procédé selon la revendication 10, **caractérisé en ce que** la structure de signaux (1) est raccordée par voie télémétrique à un récepteur.

12. Procédé selon la revendication 11, **caractérisé en ce que** le raccordement par voie télémétrique est alimenté en énergie par une structure piézoélectrique mise en place dans le matériau de base (6) et/ou dans le matériau porteur (7).

13. Procédé selon l'une des revendications précédentes, **caractérisé en ce que** la structure de signaux (1) est laminée et/ou compressée.

14. Procédé selon l'une des revendications précédentes, **caractérisé en ce que** le conducteur électrique (5) au moins au nombre de un est fixé sur une préforme par broderie.

15. Procédé selon la revendication 14, **caractérisé en ce que** plusieurs couches de la préforme sont raccordées les unes aux autres par le conducteur (5) au moins au nombre de un fixé par broderie.

16. Procédé selon l'une des revendications précédentes, **caractérisé en ce qu'**un alliage à mémoire de forme est utilisé comme matériau pour le conducteur électrique (5) au moins au nombre de un.
